# EUROPEAN PATENT APPLICATION

(11) **EP 4 749 482 A1**
(43) Date of publication of application: **27.05.2026**
(21) Application number: 24874883.2
(22) Date of filing: 19.09.2024
(51) Int. Cl.: G06F 16/954, G06F 16/9535, G06F 16/904, G06F 16/9032, G06F 16/907, G06F 16/583, G06F 16/55, G06F 16/54, G06V 10/764, G06V 40/10

(54) **DISPLAY DEVICE FOR PREVENTING SPOILER AND CONTROL METHOD THEREOF**

(30) Priority: 05.10.2023 KR 20230132531
(71) Applicant: Samsung Electronics Co., Ltd., Suwon-si, Gyeonggi-do 16677 (KR)
(72) Inventor: PARK, Youngin, Suwon-si Gyeonggi-do 16677 (KR); KIM, Byounghyun, Suwon-si Gyeonggi-do 16677 (KR); LEE, Sangyoung, Suwon-si Gyeonggi-do 16677 (KR); HAHM, Cheulhee, Suwon-si Gyeonggi-do 16677 (KR)
(74) Representative: Appleyard Lees IP LLP
(86) International application number: PCT/KR2024/014108
(87) International publication number: WO 2025/075325

(57) **Abstract**

A display apparatus is disclosed. The display apparatus includes a display, a communicator configured to perform communication with at least one external apparatus, memory, and a processor, and the processor, based on a search word being entered, determine whether to execute a spoiler prevention mode based on the search word, based on the spoiler prevention mode being executed, search for information corresponding to the search word from the at least one external apparatus through the communicator and store a search result in the memory, identify at least one portion corresponding to spoiler information from at least one of an image or text included in the stored search result, and control the display to display the search result in which the identified portion is hidden.

## Description

### [Technical Field]

The present disclosure relates to a display apparatus and a controlling method thereof, and more particularly, to a display apparatus capable of preventing spoilers and a method for controlling the same.

### [Background Art]

When searching for specific content, various results are displayed on a search result screen according to a search algorithm. In such a case, the search result may include spoiler information that the user does not wish to see.

For example, when a user searches for a national football match held the previous day, texts or images revealing the match result may be displayed together on the search result screen. If the user intends to watch the replay of the match, such search results can become spoilers. Similarly, the same problem occurs in multimedia content such as dramas or movies. For instance, when a user searches for a drama title to check its broadcasting schedule, images or texts describing the death of a character or other key events may appear on the search result screen.

Accordingly, there has been a demand for a display apparatus capable of providing a spoiler prevention function in accordance with the user's intention.

### [Disclosure of Invention]

### [Solution to Problem]

A display apparatus according to an embodiment includes a display, a communicator configured to perform communication with at least one external apparatus, memory, and a processor configured to, based on a search word being entered, determine whether to execute a spoiler prevention mode based on the search word, based on the spoiler prevention mode being executed, search for information corresponding to the search word from the at least one external apparatus through the communicator and store a search result in the memory, identify at least one portion corresponding to spoiler information from at least one of an image or text included in the stored search result, and control the display to display the search result in which the identified portion is hidden.

A method of controlling a display apparatus according to an embodiment includes, based on a search word being entered, determining whether to execute a spoiler prevention mode based on the search word, based on the spoiler prevention mode being executed, searching for information corresponding to the search word and storing a search result, identifying at least one portion corresponding to spoiler information from at least one of an image or text included in the stored search result, and displaying the search result in which the identified portion is hidden.

In a computer-readable recording medium including program that executes a method of controlling a display apparatus according to an embodiment, the controlling method includes, based on a search word being entered, determining whether to execute a spoiler prevention mode based on the search word, based on the spoiler prevention mode being executed, searching for information corresponding to the search word and storing a search result, identifying at least one portion corresponding to spoiler information from at least one of an image or text included in the stored search result, and displaying the search result in which the identified portion is hidden.

### [Brief Description of Drawings]

FIG. 1 is a block diagram illustrating a configuration of a display apparatus according to one or more embodiments;
FIG. 2 is a view provided to explain a display apparatus operating in a normal mode according to an embodiment;
FIG. 3 is a view provided to explain a display apparatus operating in a spoiler prevention mode according to an embodiment;
FIG. 4 is a view provided to explain a method of identifying spoiler information of a display apparatus according to an embodiment;
FIG. 5 is a view provided to explain a method of identifying spoiler information of a display apparatus based on display ratios of objects according to an embodiment;
FIG. 6 is a view provided to explain a knowledge graph that may be stored in memory according to an embodiment;
FIG. 7 is a view provided to explain an operation of a spoiler prevention mode according to an embodiment;
FIG. 8 is a view provided to explain an operation of a spoiler prevention mode according to an embodiment;
FIG. 9 is a view provided to explain a method of changing a graphic object according to an embodiment;
FIG. 10 is a flowchart provided to explain a method of operating a spoiler prevention mode according to an embodiment; and
FIG. 11 is a flowchart provided to explain a method of operating a spoiler prevention mode according to an embodiment.

### [Mode for Invention]

Hereinafter, the present disclosure will be described in detail with reference to the accompanying drawings.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (e.g., elements such as numeric values, functions, operations, or components), but do not exclude presence of additional features.

An expression, "at least one of A or/and B" should be understood as indicating any one of "A", "B" and "both of A and B."

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor (not shown) except for a 'module' or a 'unit' that needs to be implemented by specific hardware.

In the present specification, the term "user" may refer to a person who uses an electronic apparatus or a device (for example, an artificial intelligence electronic apparatus) that uses the electronic apparatus.

Hereinafter, an embodiment of the present disclosure will be described in greater detail with reference to the accompanying drawings.

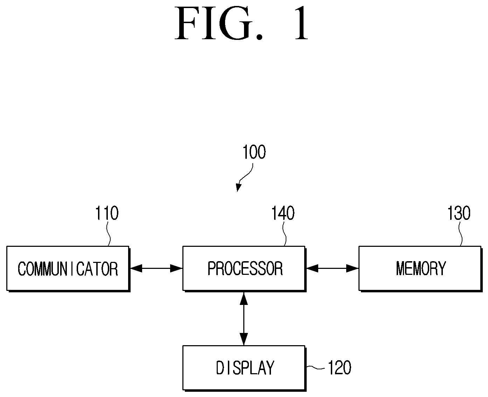

FIG. 1 is a block diagram illustrating a configuration of a display apparatus according to one or more embodiments.

Referring to FIG. 1, a display apparatus 100 includes a communicator 110, a display 120, memory 130, and a processor 140.

The communicator 110 is configured to perform communication with an external apparatus. The communicator 110 may search for a search word input by a user from external apparatuses such as a web server, a cloud server, an external hard drive, a USB memory stick, and other user terminal devices, and may receive a search result from the external apparatuses.

he communicator 110 may transmit and receive various signals and data with an external apparatus through communication schemes such as Bluetooth, Wi-Fi (Wireless LAN network) based on an access point (AP), Zigbee, wired/wireless Local Area Network (LAN), Wide Area Network (WAN), Ethernet, Institute of Electrical and Electronics Engineers 1394 (IEEE 1394), High-Definition Multimedia Interface (HDMI), Universal Serial Bus (USB), Mobile High-Definition Link (MHL), Audio Engineering Society/European Broadcasting Union (AES/EBU), optical, and coaxial.

The display 120 is configured to display various screens.

The display 120 may be implemented as a display including a self-emissive element or a display including a non-self-emissive element and a backlight. For example, the display 120 may be implemented in various forms such as a liquid crystal display (LCD), an organic light emitting diodes (OLED) display, a light emitting diodes (LED) display, a micro-light emitting diodes (micro-LED) display, a mini-light emitting diodes (Mini LED) display, a plasma display panel (PDP) display, a quantum dot (QD) display, and a quantum dot light-emitting diodes (QLED) display. The display 120 may further include a driving circuit, a backlight unit, and the like, which may be implemented in forms such as an amorphous silicon thin-film transistor (a-Si TFT), a low-temperature poly-silicon thin-film transistor (LTPS TFT), or an organic thin-film transistor (OTFT). Meanwhile, the display 120 may also be implemented as a touch screen combined with a touch sensor, a flexible display, a rollable display, a three-dimensional (3D) display, or a display in which a plurality of display modules are physically connected.

The memory 130 may store various programs, data, and instructions used in the display apparatus 100. The memory 130 may also store a search result received through the communicator 110. In addition, the memory 130 may store various types of information according to various embodiments of the present disclosure.

According to an embodiment, the memory 130 may be implemented as an internal memory such as a read-only memory (ROM) (for example, an electrically erasable programmable read-only memory (EEPROM)) or a random access memory (RAM) included in one or more processors 140, or may be implemented as a memory separate from the one or more processors 140. In this case, the memory 130 may be implemented as a memory embedded in the display apparatus 100 depending on a purpose of data storage, or as a memory attachable to and detachable from the display apparatus 100. For example, data for operating the display apparatus 100 may be stored in a memory embedded in the display apparatus 100, while data for extended functions of the display apparatus 100 may be stored in a memory attachable to and detachable from the display apparatus 100.

In the case of a memory embedded in the display apparatus 100, the memory may be implemented by at least one of a volatile memory (e.g., a DRAM (dynamic RAM), an SRAM (static RAM), or an SDRAM (synchronous dynamic RAM)) and a non-volatile memory (e.g., an OTPROM (one-time programmable ROM), a PROM (programmable ROM), an EPROM (erasable and programmable ROM), an EEPROM (electrically erasable and programmable ROM), a mask ROM, a flash ROM, a flash memory (e.g., a NAND flash or a NOR flash), a hard drive, or a solid state drive (SSD)). In the case of a memory attachable to and detachable from the display apparatus 100, the memory may be implemented as, for example, a memory card (e.g., a CF (compact flash), an SD (secure digital), a Micro-SD (micro secure digital), a Mini-SD (mini secure digital), an xD (extreme digital), or an MMC (multi-media card)) and an external memory connectable to a USB port (e.g., a USB memory).

The processor 140 controls overall operations of the display apparatus 100. Specifically, the processor 140 may be connected to the communicator 110, the display 120, and the memory 130, and may control overall operations of the display apparatus 100 by executing at least one instruction or program stored in the memory 130.

The processor 140 may be implemented as a digital signal processor (DSP), a microprocessor, or a timing controller (TCON) that processes digital signals. However, the present disclosure is not limited thereto, and the processor 140 may include, or be defined as, one or more of a central processing unit (CPU), a micro controller unit (MCU), a micro processing unit (MPU), a controller, an application processor (AP), a communication processor (CP), an ARM processor, and an artificial intelligence (AI) processor. In addition, the processor 140 may be implemented as a system on chip (SoC) or a large scale integration (LSI) with a built-in processing algorithm, or may be implemented in the form of a field programmable gate array (FPGA). The processor 140 may perform various functions by executing computer-executable instructions stored in the memory.

When a method according to various embodiments of the present disclosure includes a plurality of operations, the plurality of operations may be performed by a single processor or by a plurality of processors. The processor 140 may be implemented as a single-core processor including one core, or as one or more multi-core processors including a plurality of cores (for example, a homogeneous multi-core or a heterogeneous multi-core).

When a user inputs a search word, the processor 140 may search, through the communicator 110, for information corresponding to the search word from various external apparatuses. The processor 140 may store the search result in the memory 130.

For example, when the user inputs a search word "Team A vs. Team B highlights," the processor 140 transmits the search word to an external apparatus through the communicator 110. The external apparatus may perform a search using its own search engine and then transmit the search result. In one example, the external apparatus may search, within an index secured by previously searching and crawling news articles, videos, images, papers, and other Internet materials, for data including all or part of the search word, and transmit the data.

When the communicator 110 receives, from the external apparatus, the search result including postings such as "Team A vs. Team B, (2-1) Team A wins, highlights," the processor 140 stores the received search result in the memory 130.

In a general case, the processor 140 may configure a search result screen by organizing the search result as it is according to a preset layout, and may control the display 120 to display the search result screen. In other words, the processor 140 may show the search result to the user as is, without identifying whether spoiler information is included and without hiding spoiler information. In the present disclosure, such an operation mode is referred to as a normal mode.

Meanwhile, when the processor 140 determines that spoiler prevention is necessary, the processor 140 may configure the search result screen in a state in which at least a part of the search result is hidden, and control the display 120 to display the search result screen. In the present disclosure, an operation mode of displaying, with a portion corresponding to spoiler information in the search result being hidden, is referred to as a spoiler prevention mode.

In the present disclosure, the terms "normal mode" and "spoiler prevention mode" are used; however, these terms are defined for convenience of description, and such terms may be variously modified. For example, the spoiler prevention mode may be described as a special mode, a non-standard mode, a spoil block mode, or a filter mode, and the normal mode may be described as a standard mode or a non-filter mode. The function may also be described as a function rather than a mode. Hereinafter, the terms "normal mode" and "spoiler prevention mode" will be used, respectively.

Unless the external apparatus transmits, together with the search result, information indicating whether spoiler information is included in the search result and information on a portion corresponding to the spoiler information, the processor 140 cannot identify whether the search result includes spoiler information without analyzing the search result. Accordingly, the processor 140 stores, in the memory 130, a search result to be subjected to image and text analysis and identifies whether spoiler information exists in the stored search result.

Whether to execute the spoiler prevention mode may be determined in various ways. In one example, a user may preset one of the normal mode and the spoiler prevention mode as an operation mode.

In another example, the processor 140 may determine whether to execute the spoiler prevention mode based on a search word input by the user. In this case, even when the user does not arbitrarily set a mode in advance, the spoiler prevention mode may be automatically executed according to the search word.

Specifically, the processor 140 may identify whether the search word includes a term for determining execution of the spoiler prevention mode. The term for determining execution of the spoiler prevention mode may include various terms reflecting a user's intention to block spoiler information, such as "without spoilers" and "without match results." A database for terms for determining whether to execute the spoiler prevention mode may be stored in advance in the memory 130, and may be updated from time to time.

Specifically, when the user inputs a search word "Team A vs. Team B highlights without knowing the match result," the processor 140 may recognize that the search word includes a term "without knowing the match result." The processor 140 may determine whether the term "without knowing the match result" is stored in the memory 130 as a term for determining execution of the spoiler prevention mode, and when the term "without knowing the match result" is stored in the memory 130, execute the spoiler prevention mode.

Even when the term "without knowing the match result" is not stored in the memory 130, the processor 140 may recognize, through natural language processing (NLP) or the like, that the term "without knowing the match result" has the same meaning as the term "without match results," recognize that the search word includes a term for determining execution of the spoiler prevention mode, and execute the spoiler prevention mode. In such a manner, the processor 140 may update, from time to time, the terms stored in the memory 130 when terms having similar meanings are identified. In addition, in a case where a term is composed of a combination of a plurality of words, such as "without game results" described above, the processor 140 may divide the respective words constituting the combination into semantic units, and store at least one of them as a term. In the above example, the processor 140 may store "without" among "game," "result," and "without" as a term.

The processor 140 may determine to execute the spoiler prevention mode when the search word includes a term for determining execution of the spoiler prevention mode, and may determine to execute the normal mode when the search word does not include the term.

In another example, the processor 140 may, after identifying a user's search pattern based on the user's search histories, determine whether to execute the spoiler prevention mode. In this case, even when the search word input by the user does not include a term related to the spoiler prevention mode, the processor 140 may identify the user's intention based on the user's search pattern and execute the spoiler prevention mode. Information on the search histories and the search pattern may be stored in the memory 130.

For example, records in which a user searched for "Team A game highlight without spoiler" or "Team A game highlight without knowing game results," or records in which the user searched for "Team A game highlight" while executing the spoiler prevention mode, may be stored in the memory 130. The processor 140 may learn the stored search histories and identify a user's search pattern that "when searching for a Team A game, the spoiler prevention mode is executed." The processor 140 may also store, in the memory 130, information on the search pattern identified based on the search histories. Alternatively, the processor 140 may store, in the memory 130, the term itself, such as "Team A" or "Team A game," matched with the spoiler prevention mode.

Accordingly, even when the user does not execute the spoiler prevention mode or even when the search word does not include a term for determining execution of the spoiler prevention mode, the processor 140 may execute the spoiler prevention mode whenever the user searches for Team A's match.

When there is no search history of the user or when no distinct search pattern is identified, the processor 140 performs a search in a normal mode if a term corresponding to the spoiler prevention mode itself is not included in the search word. In the above example, when the user inputs a search word "Team B match highlights," since there is no search pattern identified by the processor 140 for "Team B match," the processor 140 may display the search result to the user in the normal mode. The processor 140 may, after identifying content to be searched by the user based on the search word, configure a search result screen according to a determined operation mode. For example, when the user inputs a search word "Episode 13 of XXX drama replay," the processor 140 may identify, from the search word, that the content the user intends to search is "Episode 13 of XXX drama."

Specifically, the processor 140 may, through natural language processing (NLP), split the search word "Episode 13 of XXX drama replay" into individual words "XXX drama"/"Episode 13"/"replay" and analyze meanings of the respective words. Through this, the processor 140 may recognize an entity "Episode 13 of XXX drama," grasp the user's intention to "replay" the entity, and identify that the content the user intends to obtain through the search is "Episode 13 of XXX drama."

In the above embodiment, a method of analyzing a user's search word through NLP is exemplified; however, one or more embodiments of the present disclosure may include all methods of analyzing a user's search word through various methods such as BM25 and TF-IDF algorithms.

According to another example, the processor 140 may determine whether to execute the spoiler prevention mode based on a time at which the search is performed.

In general, when a long time has elapsed after the content has been released, it is highly likely that the user already knows the result or details of the content. On the other hand, when only a short time has elapsed, the user may often have an intention not to be exposed to spoiler information. The release of content may refer to a situation in which, in the case of a sports match, the sports match has ended, in the case of a drama, a latest episode or a final episode has finished broadcasting, and in the case of a movie, the movie has been released or its screening period has ended.

The processor 140 may compare a release time of content with an input time of a user's search word, and determine whether to execute the spoiler prevention mode. For example, when the user inputs a search word "Team A vs. Team B soccer match highlights" at 10:00 PM on June 8, 2023, and the "Team A vs. Team B soccer match" ends or is released at 5:00 PM on June 8, 2023, a difference between the input time of the search word and the release time of the content is five hours. In this case, if a preset value is ten hours, since the difference between the two times is equal to or less than the preset value, the processor 140 may determine to execute the spoiler prevention mode.

On the other hand, when the difference between the two times exceeds the preset value, the processor 140 may determine to execute the normal mode rather than the spoiler prevention mode.

In the above description, although the preset value is exemplified as ten hours, this is merely one example and may be set to various values by a user setting or by default. Alternatively, different values may be set according to types of content. For example, in the case of a sports match, it may be determined as a point in time at which most users are likely to come across the result in their daily lives (for example, two weeks). On the other hand, in the case of dramas or movies, there may be cases where they are provided again through VOD services or other sources after a long period of time has passed since the end of broadcasting. Accordingly, the period may be set to be very long (about one year), or it may be set to execute the spoiler prevention mode unconditionally regardless of the period.

The processor 140 may confirm, by various methods, a release time at which "Episode 13 of XXX drama" is released on a portal site or an application through the search result. For example, since a video posted in the search result includes its source and a posting date and time, the processor 140 may calculate the release time of "Episode 13 of XXX drama" based thereon. In another example, the processor 140 may check a posting date and time from a description of the video or metadata included in a video posted in the search result and calculate the release time of "Episode 13 of XXX drama."

The processor 140 may confirm a release time of content to be searched through the methods described above, calculate a difference between the release time of the content and the input time of the user's search word, and determine whether to execute the spoiler prevention mode according to whether the difference exceeds a preset value.

When an operation mode is determined based on time, the processor 140 may determine the operation mode without using terms stored in the memory 130. However, this is merely an example, and the embodiments described above may be implemented in combination. For example, the processor 140 may determine the operation mode by considering all of whether a term stored in the memory 130 is included, the search time, and the content release time.

In another example, when an image is included in the search result, the image itself or a part thereof may constitute spoiler information. For example, if an image includes a scene where a particular team's player celebrates after scoring a goal or a scene where many players of the team gather for a goal ceremony, the match result may be immediately known even without separate text. The processor 140 may, by analyzing the number and ratio of objects included in the image, determine whether spoiler information is included in all or part of the image. This will be described again in detail below.

When an operation mode is determined, the processor 140 may configure search result according to the operation mode, generate a search result screen, and control the display 120 to display the search result screen. When the spoiler prevention mode is executed, the processor 140 may generate the search result screen such that a portion corresponding to spoiler information is hidden. Hereinafter, examples of the search result screen according to each operation mode will be described in detail.

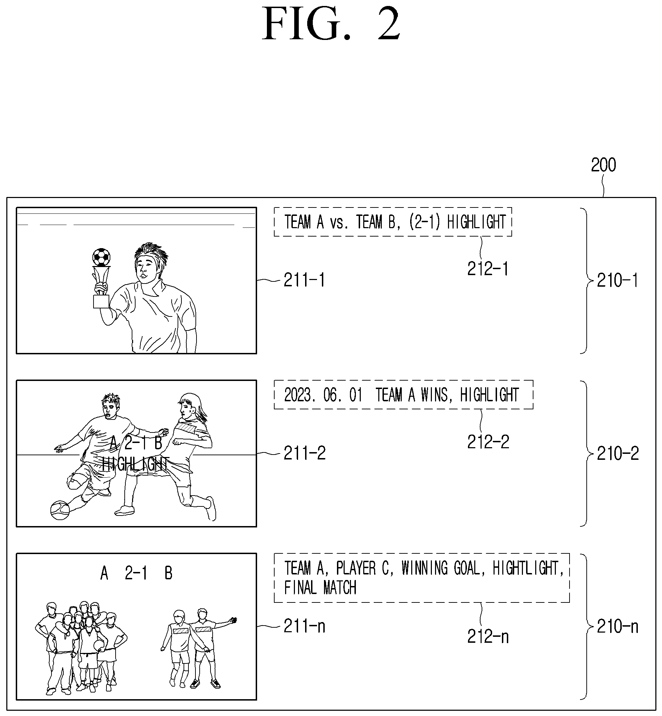

FIG. 2 is a view provided to explain a display apparatus operating in a normal mode according to an embodiment.

When a user inputs a search word "Team A vs. Team B highlight," the processor 140 may configure a search result screen as shown in FIG. 2, and control the display 120 to display the search result screen.

According to FIG. 2, a search result screen 200 may include n search results (210-1, 210-2, ..., 210-n) composed of images (211-1, 211-2, ..., 211-n) and texts (212-1, 212-2, ..., 212-n). Although FIG. 2 illustrates a case where the texts are implemented as content titles, this is merely an example, and the texts may also include summary portions of some content in addition to the titles.

Since the search word "Team A vs. Team B highlight" input by the user does not include a term such as "without game results," the processor 140 may determine that, unless there is a special circumstance, there is no user intention to execute the spoiler prevention mode. Therefore, the processor 140 provides the search result in the normal mode.

In the normal mode, because spoiler information is displayed as it is without being hidden, the images (211-1, 211-2, ..., 211-n) and the texts (212-1, 212-2, ..., 212-n) are displayed as they are. The user can immediately recognize from the search result screen 200 which team won, what the score difference is, and which player scored.

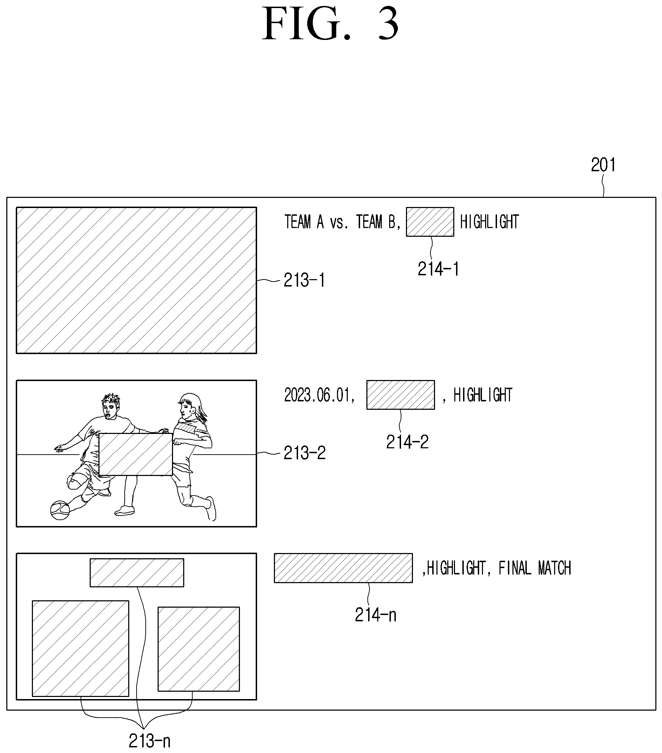

FIG. 3 is a view provided to explain a display apparatus operating in a spoiler prevention mode according to an embodiment.

When the display apparatus 100 operates in the spoiler prevention mode, the processor 140 configures a search result screen 201 in which portions identified as spoiler information within images or texts are covered with graphic objects.

According to FIG. 3, when a user inputs a search word "Team A vs. Team B highlight without game results," the user can see the search result screen 201 including graphic objects (213-1, 213-2, ..., 213-n) covering portions of the images and graphic objects (214-1, 214-2, ..., 214-n) covering portions of the texts.

The processor 140 may analyze the images and texts included in the search results of FIG. 2 to identify whether portions corresponding to spoiler information exist. The method of analyzing images will first be described.

The image 211-1 included in the first search result 210-1 of FIG. 2 is an image showing one player of Team A holding a trophy. The processor 140 may recognize, through analysis using a knowledge graph, that the uniform of the player in the image is a uniform of Team A and that the player is holding a trophy. Here, the knowledge graph refers to data structurally organized by connecting pieces of information based on correlations among the pieces of information, which will be described in detail later. Based on the fact that no Team B player exists in the image 211-1, only a Team A player exists, and the Team A player is holding a trophy, the processor 140 may identify this as spoiler information.

The image 211-2 included in the second search result 210-2 of FIG. 2 is an image showing one player of Team A and one player of Team B, and including texts "Team A 2-1 Team B" and "HIGHLIGHT." Since one player of Team A and one player of Team B are displayed, and players of one team are not displayed at a higher ratio, the processor 140 does not determine this as spoiler information. In addition, the processor 140 may recognize texts existing within the image through optical character recognition (OCR), and may understand meanings of the recognized texts through natural language processing (NLP). Among the texts "Team A 2-1 Team B" and "HIGHLIGHT," the processor 140 may determine that "Team A 2-1 Team B" corresponds to spoiler information because it indicates a game score, whereas "HIGHLIGHT" merely means "main scenes" and therefore does not correspond to spoiler information.

The image 211-n included in the search result 210-n displayed at the bottom of FIG. 2 shows eight Team A players and two Team B players and includes the text "Team A 2-1 Team B." The processor 140 may recognize, based on the knowledge graph, that there are eight players wearing Team A uniforms and two players wearing Team B uniforms. Because the display ratio of Team A players is greater than that of Team B players, the user may infer that Team A won. Therefore, the processor 140 may identify this as spoiler information and may cover the players of both teams with a graphic object 213-n of FIG. 3 so that the display ratios of A and Team B players cannot be seen by the user.

The processor 140 recognizes and analyzes texts such as content titles to identify whether spoiler information is included.

In the text 212-1 included in the first search result 210-1 of FIG. 2, a text "2-1" is included. The processor 140 may identify that the text "2-1" included in the text 212-1 corresponds to spoiler information indicating that Team A won Team B by 2-1, by taking into account a context with other texts included in the text 212-1.

In the text 212-2 included in the second search result 210-2 of FIG. 2, a text "Team A victory" is included, and in the text 212-n of the third search result 210-n, a text "Player C final goal" is included. The processor 140 may identify such texts as spoiler information by taking into account words and contexts included in the texts.

In the spoiler prevention mode, the processor 140 may identify spoiler information existing in images and texts included in search results through the above-described method, and may display graphic objects 213-1, 213-2, 213-n, 214-1, 214-2, and 214-n that cover portions identified as spoiler information.

Although FIG. 3 illustrates a case in which portions identified as spoiler information are covered with graphic objects in search results, the present disclosure is not limited thereto, and depending on a user setting, if spoiler information exists even partly in a post, the entire post may be covered with a graphic object or various methods may be used to cover portions identified as spoiler information.

Although FIG. 3 illustrates only a method of identifying spoiler information and covering identified portions with graphic objects when sports content is searched, the present disclosure is not limited thereto, and spoiler information may be identified and identified portions may be covered with graphic objects for various content such as dramas, movies, and entertainment programs as well as sports content.

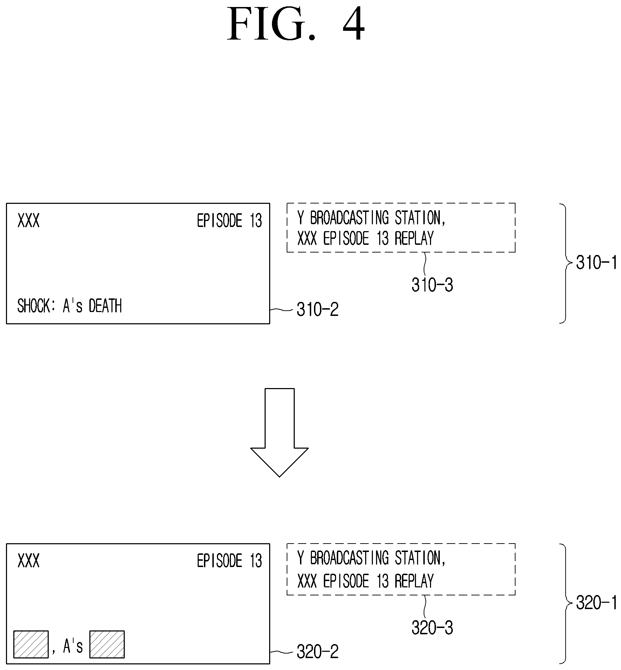

FIG. 4 is a view provided to explain a method of identifying spoiler information of a display apparatus according to an embodiment.

When the display apparatus 100 operates in the spoiler prevention mode, the processor 140 may identify texts other than keywords stored in the memory 130 as spoiler information and cover the identified portions with graphic objects.

According to FIG. 4, when the display apparatus 100 operates in the normal mode, a user may be provided with a post 310-1 corresponding to a search word "XXX Episode 13 Replay." An image 310-2 of the post 310-1 includes texts "XXX," "Episode 13," and "Shocking, A's death," and a text 310-3 of the post 310-1 includes a title "Y Broadcasting Station, XXX Episode 13, Replay" and a summary text of the content.

On the other hand, when the display apparatus 100 operates in the spoiler prevention mode, the user may be provided with a post 320-1 including an image 320-2 and a text 320-3 in which portions identified as spoiler information are covered with graphic objects.

The memory 130 may store keywords that do not include spoiler information for each content type. For example, in the case of drama content, a drama title, a name of a broadcasting station airing the drama, a name of an OTT platform, episode information of the drama, and names of characters may be keywords that do not include spoiler information.

Accordingly, the processor 140 may identify texts other than the keywords stored in the memory 130 as spoiler information without analyzing meanings of images or texts.

Specifically, when a search word "XXX drama Episode 13 Replay" is input, the processor 140 may recognize that the content the user wants to search is "XXX drama," store in the memory 130 information such as a broadcasting station name (Y Broadcasting Station), a character name (A), and episode information (Episode 13) of the "XXX drama," and identify all other texts except these as spoiler information. In other words, the processor 140 may recognize "XXX," "Episode 13," and "A" in the image 310-2 as keywords stored in the memory 130 and not identify them as spoiler information, while identifying words such as "shocking" and "death," excluding "XXX," "Episode 13," and "A," are all identified as spoiler information and covering them with graphic objects.

In addition, the processor 140 may update keywords for each content in the memory 130 through analysis of a user's search history and analysis results of search results.

Although FIG. 4 illustrates a method of identifying spoiler information for drama content using keywords stored in the memory 130, the present disclosure is not limited thereto, and spoiler information may be identified for various content such as movies, sports, and entertainment programs by using keywords stored for each content.

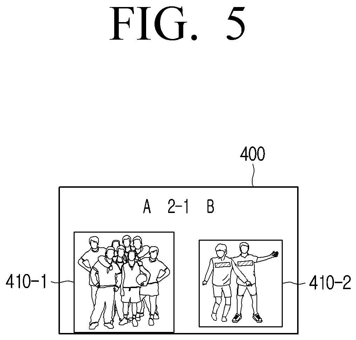

FIG. 5 is a view provided to explain a method of identifying spoiler information of a display apparatus based on display ratios of objects according to an embodiment.

According to FIG. 5, eight Team A players 410-1 and two Team B players 410-2 are included in an image 400.

The processor 140 may extract visual features such as shapes and colors from the image 400 and detect objects existing in the image 400. For example, the processor 140 matches a plurality of windows each having an n×m pixel size with respect to the image 400. The processor 140 calculates a representative value (for example, an average pixel value) of pixel values of pixels included in each window, and detects an edge portion by finding and connecting windows having consecutive representative values within a similar range. When an area surrounded by the detected edge is identified, the processor 140 may identify an object represented by the edge based on representative values of the respective windows within the corresponding area and a shape of the edge. However, this is merely one example, and the processor 140 may also detect an object by using a trained artificial intelligence model or may detect the object in various other ways.

When an object is detected, the processor 140 may identify an attribute of the detected object. For example, the processor 140 may detect ten players having visual features such as shapes and colors different from the background on the image 400, and may identify colors of uniforms worn by each of the ten players.

When the colors of the uniforms worn by the players are identified, the processor 140 may identify to which team each player existing in the image 400 belongs based on a knowledge graph. The processor 140 may extract information related to attributes of the detected objects by mapping attributes of the detected objects to related nodes of the knowledge graph. For example, when an object "soccer player wearing a red uniform" is identified, the processor 140 may map several related nodes existing in a category "soccer" of the knowledge graph, and may extract information such as which league the "soccer player wearing a red uniform" belongs to, which team the player belongs to, and what rank the team has.

In the above description, information related to attributes of objects is extracted based on colors of uniforms, but the present disclosure is not limited thereto, and the information related to attributes of objects may be extracted based on various features such as the appearance of the objects, the back number of the objects, and characters written on the uniforms.

Through the above-described analysis method, the processor 140 may extract information related to each of the objects existing in the image. Through the extracted information, the processor 140 may classify the objects into a plurality of groups according to correlations among the objects. For example, the processor 140 may classify eight players 410-1 wearing red uniforms as Team A players and two players 410-2 wearing blue uniforms as Team B players, respectively.

The processor 140 may compare display ratios among the plurality of groups in the image 400, and may identify the image 400 as spoiler information when a difference between the display ratios is equal to or greater than a preset ratio. For example, since there are eight Team A players and two Team B players in the image 400, the display ratio of the Team A players is 0.8 and the display ratio of the Team B players is 0.2. When the preset ratio is 0.1, the difference between the display ratio of the Team A and the display ratio of the Team B exceeds the preset ratio 0.1, so the processor 140 may identify the image 400 as spoiler information.

In the above description, the preset ratio is exemplified as 0.1, but it may be set to a value between 0 and 1 according to a user setting.

In addition, in the above description, it is exemplified that the display ratio of a specific group is calculated based on the ratio of the number of objects of the specific group to the total number of objects existing in the image, but the present disclosure is not limited thereto, and the display ratio of a specific group may be determined in consideration of various factors such as an area where the objects of the specific group are displayed on the display and a position where the objects are displayed on the display.

Further, in the above description, it is exemplified that a difference in display ratio between two groups is considered, but the present disclosure is not limited thereto, and whether information corresponds to spoiler information may also be identified based on a difference in display ratio among two or more groups.

When the processor 140 identified the information corresponding to spoiler information based on a difference in display ratio among a plurality of groups, the processor 140 may display at least one group in a covered state in the image 400. For example, when a display ratio of Team A players 410-1 in the image 400 is higher than a display ratio of Team B players 410-2 and there is a possibility that spoiler information that Team A won is provided to the user, the processor 140 may provide to the user an image in which both Team A and Team B players are covered with graphic objects. Through this, the user cannot recognize that a display ratio of a specific team is larger, and a spoiler for the user can be prevented.

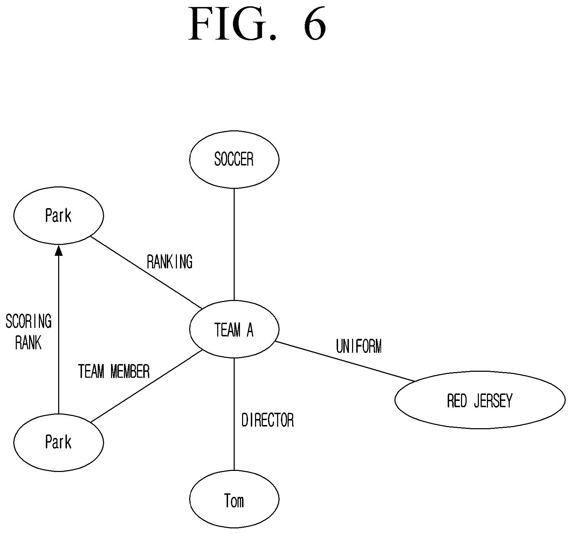

FIG. 6 is a view provided to explain a knowledge graph that may be stored in memory according to an embodiment.

The term "knowledge graph" refers to a database in which a plurality of pieces of information are structurally connected and organized by using nodes and edges based on correlations among the pieces of information. In the nodes of the knowledge graph, a plurality of pieces of information are respectively input, and the edges of the knowledge graph represent relationships among the nodes.

According to FIG. 6, there exists a node called "Team A" in a category of soccer, and various nodes connected to "Team A" through edges exist. For example, a node in which information "red upper garment" is input is connected through an edge to a node in which information "Team A" is input, and the edge has a relationship "uniform" input thereto. In addition, a node in which a name "Park" is input and a node in which "9th place" is input are connected through an edge, and the edge has a relationship "scoring rank" input thereto.

Since the knowledge graph structurally organizes a plurality of pieces of information based on relationships among the pieces of information, the processor 140 may extract various pieces of information related to an object by mapping information extracted from images and texts to specific nodes on the knowledge graph. For example, when the processor 140 detects in an image a soccer player wearing a "red upper garment" with a marking "Park," the processor 140 may map the detected object to a node to which information "Park" and "red upper garment" are input among nodes belonging to a category "soccer." By extracting information of various nodes connected to the above nodes through edges (for example, "Team A," "9th place," "Tom"), the processor 140 may identify that the detected object is a "player of Team A ranked 9th in the league."

While the above description only explains a method of extracting information on the team to which an object included in an image belongs by means of a knowledge graph, the present disclosure is not limited thereto, and various types of related information may be extracted through various fields and methods, for example, by extracting actor information from a scene of a drama and mapping the extracted information to a specific node of the knowledge graph so as to extract various kinds of information related to the drama.

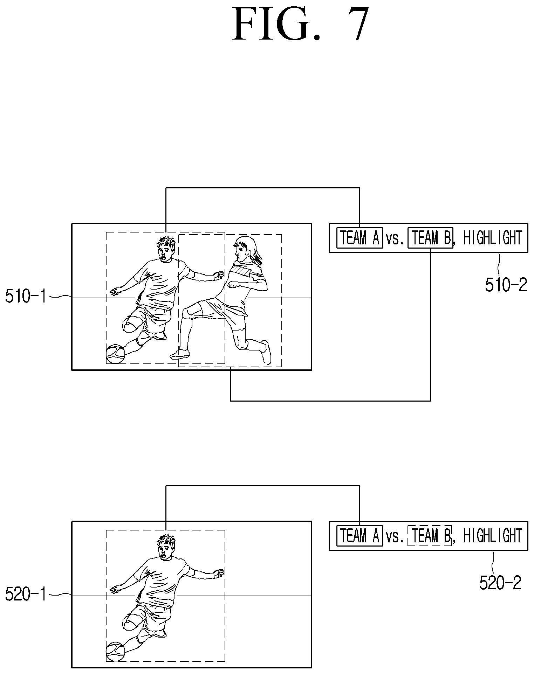

FIG. 7 is a view provided to explain an operation of a spoiler prevention mode according to one of various embodiments.

According to FIG. 7, the processor 140 may identify whether an object corresponding to a portion of a text is included in an image through image analysis and text analysis based on a knowledge graph. For example, the processor 140 may analyze an image 510-1 and identify that one player of Team A and one player of Team B are included in the image, and may identify that a text 510-2 includes a text "Team A vs. Team B." Through this, the processor 140 may associate the text "Team A" included in the text 510-2 with an object "Team A player" included in the image 510-1, and similarly may associate the text "Team B" with an object "Team B player."

In this case, when the number of objects detected from the text 510-2 matches the number of objects included in the image 510-1, the processor 140 may determine that it does not correspond to spoiler information. On the other hand, when the number of objects detected from the text 510-2 does not match the number of objects included in the image 510-1, the processor 140 may determine that it corresponds to spoiler information.

For example, the processor 140 may analyze an image 520-1 of a post displayed at the lower part of FIG. 7 and identify that only one player of Team A is included in the image, and may identify that a text 520-2 includes a text "Team A vs. Team B." Through this, the processor 140 may recognize that although "Team B" is included in the text 520-2, there is no corresponding object "Team B player" in the image 520-1, and only the object "Team A player" corresponding to the text "Team A" is included. Since a user can easily infer that "Team B," which is included in the text 520-2 but not in the image 520-1, lost the match, the processor 140 may identify this as spoiler information and control the display to display the image in a state in which the Team A player is covered.

The above description explains only a method of identifying whether spoiler information exists based on whether there is corresponding information between an image and a text by comparing the image and the text; however, the present disclosure is not limited thereto, and the correspondence of object information may also be determined in various ways, such as by identifying whether object information corresponding to text present within the image exists, based on the text included in the image.

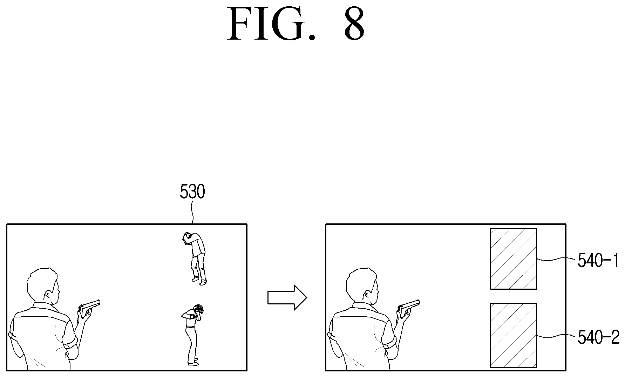

FIG. 8 is a view provided to explain an operation of a spoiler prevention mode according to one of various embodiments.

According to FIG. 8, the processor 140 may identify the presence of persons included in an image 530 and control the display 120 to display an image in a state in which all portions except any one of the identified persons are covered.

Since various events occur among characters in most content, if events among multiple characters are included in an image, a user may know in advance what events will occur among the characters even before watching the content. Therefore, to prevent such a situation, the processor 140 may cover all portions except one person with graphic objects 540-1 and 540-2.

If an image 530 in which a character holding a gun shoots another one among two other characters is displayed as it is as illustrated in FIG. 8, the user may easily infer from the image 530 alone what kind of conflict exists among the characters or who is the antagonist. Accordingly, the processor 140 may prevent spoiler information from being provided to the user by covering the other two characters with graphic objects 540-1 and 540-2 except for one character.

Although FIG. 8 illustrates that two characters except for the character holding a gun are covered with graphic objects, the character holding the gun may also be covered with a graphic object, and which character is covered with a graphic object may be randomly determined in various ways.

Although FIG. 8 illustrates that only portions where the characters are displayed are covered with graphic objects, the present disclosure is not limited thereto, and it may be implemented such that only one person is displayed in the image and the remaining portions (including the background and other persons) are all covered.

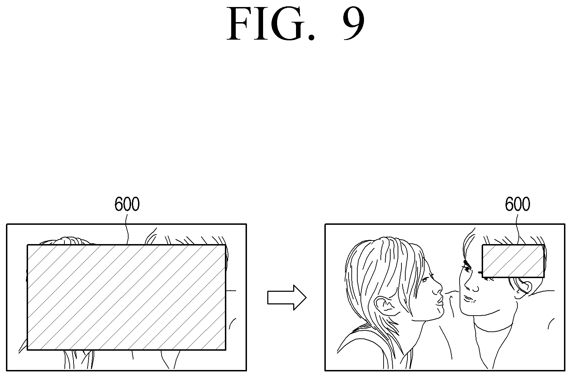

FIG. 9 is a view provided to explain a method of changing a graphic object according to an embodiment.

The processor 140 may display a graphic object 600 to cover spoiler information included in an image and text of a search result. The processor 140 may change a position, size, shape, color, and type of the graphic object 600 according to a user manipulation. The types of the graphic object 600 may include geometric figures, mosaics, and blurs.

According to FIG. 9, when there is no user manipulation, the processor 140 may control the display 120 to display a rectangular graphic object 600 capable of covering only a portion identified as spoiler information.

When the display 120 includes a panel capable of receiving a touch input, the user may change the size, position, shape, color, or type of the graphic object 600 by touching the portion of the graphic object 600. When the user touches the portion of the graphic object 600, the processor 140 may detect the touched graphic object and provide a setting menu that allows the user to freely manipulate the detected graphic object.

Specifically, when an image of content is covered with the graphic object 600, the user may check only a portion of the image and the user may become curious to check the portion that is covered by the graphic object 600. In such a case, the user may gradually reduce the size of the graphic object 600 to check the content of the image little by little. The user may touch the portion where the graphic object 600, of which the size is to be changed, is located, touch the "size" tab in the settings menu, and reduce the size of the graphic object 600 through a touch operation. By displaying the graphic object 600 in its reduced size, the user may view the content of the image that was previously covered.

In addition, the user may remove the graphic object 600 by touching a "remove" tab in the setting menu, and may move the graphic object 600 by touching a "move" tab and then touching a position to which the graphic object is to be moved. Through such operations, the user may freely manipulate the graphic object 600 and check the content of the image.

Further, the user may change the type of the graphic object 600 in the setting menu. The graphic object 600 may be implemented in various forms, including not only various shapes of figures but also mosaic forms, blur forms, and the like. The user may change the color or type of the graphic object 600 in various ways.

For example, the user may select tabs such as "change color," "blur processing," or "mosaic processing" in the setting menu to change the type of the graphic object 600. For example, if the graphic object is black, the user may change its color to white, yellow, or the like by selecting the "color change" tab. When the user selects the "blur processing" tab, the processor 140 may blur the image or text portion corresponding to the spoiler information instead of using a rectangular graphic object. When the "mosaic processing" tab is touched, the processor 140 may express the graphic object in the form of a mosaic.

Although FIG. 9 illustrates only a rectangular graphic object, the present disclosure is not limited thereto, and various figures such as ellipses, rhombuses, and triangles capable of covering spoiler information may be implemented as a graphic object.

In the above description, it is described that the position, size, shape, or type of the graphic object may be changed through a user's touch input, but the present disclosure is not limited to a touch input, and at least one of the position, size, shape, and type of the graphic object may be changed through various methods of receiving a user signal such as a remote controller or a user's voice signal.

In the above description, a case in which a spoiler prevention mode is performed by overlapping graphic objects on images or texts to cover them has been described; however, the processor 140 may also change the image or the text itself. For example, when the processor 140 determines that at least a portion of an image included in a search result corresponds to spoiler information, the processor 140 may change the pixel values to be displayed in that portion so as to mosaic or blur the corresponding image. Alternatively, the processor 140 may reconstruct the image by changing the color values of the portion corresponding to the spoiler information within the image to be identical to the surrounding color values so that the image is displayed as if a graphic object were overlaid. The processor 140 may also replace portions corresponding to the spoiler information within the text with question marks, exclamation marks, or other symbols so that the user cannot identify the spoiler information.

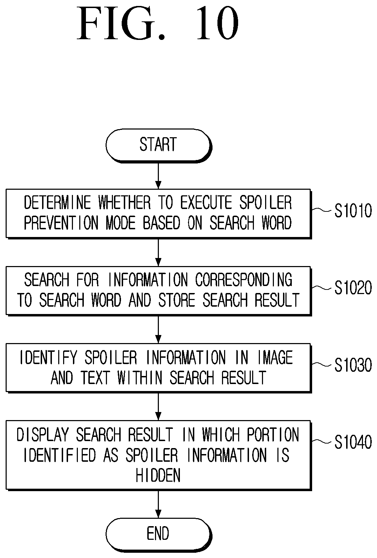

FIG. 10 is a flowchart provided to explain a method of operating a spoiler prevention mode according to an embodiment.

According to FIG. 10, the display apparatus determines whether to execute the spoiler prevention mode based on an input search word (S1010). In this case, the display apparatus may identify whether the input search word includes a term for determining execution of the spoiler prevention mode, such as "without match result" or "without spoiler," and determine whether to execute the spoiler prevention mode.

Subsequently, when the spoiler prevention mode is executed, the display apparatus searches for information corresponding to the search word and stores the search result (S1020).

Then, the display apparatus identifies spoiler information in images and texts within the search result (S1030). In this case, the display apparatus may identify, as spoiler information, portions other than keywords that are publicly disclosed for each piece of content, such as the title of a drama or the names of characters, in the images and texts included in the search result.

Subsequently, the display apparatus displays the search result in which portions identified as spoiler information are covered (S1040).

According to an embodiment, when an image included in the search result includes a person, the display apparatus may display the search result in a state in which all portions except the person are covered so that the user cannot recognize content details through the image.

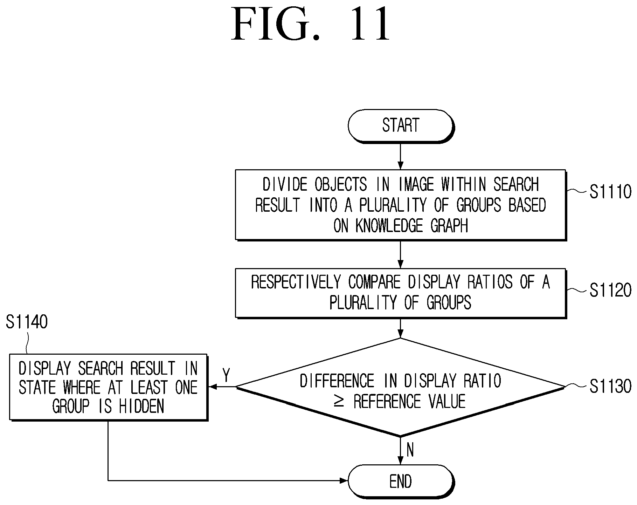

FIG. 11 is a flowchart provided to explain a method of operating a spoiler prevention mode according to an embodiment.

According to FIG. 11, the display apparatus classifies objects of images in search results into a plurality of groups based on a knowledge graph, which is a database structurally organized by connecting information for each content based on correlations among pieces of information (S1110).

Subsequently, the display apparatus compares display ratios of the plurality of groups in the image (S1120).

Then, the display apparatus identifies whether a difference in display ratios among the plurality of groups is equal to or greater than a reference value (S1130).

When the difference in display ratios is equal to or greater than the reference value, the display apparatus displays the search results in a state in which at least one group is covered (S1140). In this case, when the difference in display ratios is less than the reference value, the search results are displayed as they are without being covered.

According to an embodiment, the display apparatus may identify text corresponding to content to be searched within text included in search results, identify object information related to the identified text based on a knowledge graph, and display the search results in a state in which objects corresponding to the identified object information in an image included in the search results are covered.

Although various embodiments have been described individually or in combination above, the embodiments are not necessarily implemented independently. In other words, the various embodiments described above may be implemented together in a single product wholly or partially in combination with at least one other embodiment.

Meanwhile, the methods according to the various embodiments of the present disclosure described above may be implemented in the form of an application installable on an existing display apparatus.

In addition, the methods according to the various embodiments of the present disclosure described above may be implemented through only a software upgrade or a hardware upgrade for an existing display apparatus.

Further, the various embodiments of the present disclosure described above may be performed through an embedded server provided in the display apparatus or at least one external server.

Meanwhile, the above-described various embodiments may be implemented as software including instructions stored in machine-readable storage media, which can be read by machine (e.g.: computer). The machine may be a device that invokes the stored instruction from the storage medium and can be operated based on the invoked instruction, and may include an electronic device (e.g.: electronic apparatus (A)) according to the embodiments disclosed herein. In case that the instruction is executed by the processor, the processor may directly perform a function corresponding to the instruction or other components may perform the function corresponding to the instruction under control of the processor. The instruction may include codes generated or executed by a compiler or an interpreter. The machine-readable storage media may be provided in a non-transitory storage medium. Here, 'non-transitory storage medium' merely means that the storage medium is tangible without including a signal, and does not distinguish whether data are semi-permanently or temporarily stored in the storage medium.

In addition, according to an embodiment, the methods according to an embodiment may be included and provided in a computer program product. The computer program product may be traded as a product between a seller and a purchaser. The computer program product may be distributed in the form of a storage medium (e.g., compact disc read only memory (CD-ROM)) that is readable by devices, or may be distributed through an application store (e.g., PlayStoreTM). In the case of an online distribution, at least part of the computer program product may be at least temporarily stored in a storage medium such as a server of the manufacturer, a server of an application store, or the memory of a relay server or may be temporarily generated.

Further, the components (e.g., modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the various embodiments may be executed in a sequential manner, a parallel manner, an iterative manner, or a heuristic manner, or at least some of the operations may be performed in a different order or be omitted, or other operations may be added.

Although preferred embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. A display apparatus comprising:
a display;
a communicator configured to perform communication with at least one external apparatus;
memory; and
a processor,
wherein the processor, based on a search word being entered, determine whether to execute a spoiler prevention mode based on the search word;
based on the spoiler prevention mode being executed, search for information corresponding to the search word from the at least one external apparatus through the communicator and store a search result in the memory;
identify at least one portion corresponding to spoiler information from at least one of an image or text included in the stored search result; and
control the display to display the search result in which the identified portion is hidden.

2. The display apparatus as claimed in claim 1, wherein the memory stores terms for determining execution of the spoiler prevention mode;
wherein the processor is configured to, based on the search word including a term stored in the memory, execute the spoiler prevention mode.

3. The display apparatus as claimed in claim 1, wherein the processor is configured to:
identify content to be searched by a user based on the search word, and compare a release time of the content with an input time of the search word;
based on a difference between the release time of the content and the input time being equal to or less than a preset value, execute the spoiler prevention mode; and
based on the difference exceeding the preset value, execute a normal mode for displaying the search result as it is.

4. The display apparatus as claimed in claim 1, wherein the memory stores information on a user's search history; and
wherein the processor is configured to:
identify a search pattern of the user based on the search history; and
based on the search word being entered, determine whether to execute the spoiler prevention mode based on the search word and the search pattern.

5. The display apparatus as claimed in claim 1, wherein the memory stores at least one keyword disclosed for each content; and
wherein the processor is configured to identify, as the spoiler information, a remaining portion excluding the at least one keyword among at least one of an image or text included in the search result.

6. The display apparatus as claimed in claim 1, wherein the memory stores data in which information for each content is structurally connected and organized based on correlations among information; and
wherein the processor is configured to:
based on data stored in the memory, divides objects in an image included in the search result into a plurality of groups according to correlations among the objects; and
compare display ratios among the plurality of groups, and based on a difference in display ratio being equal to or greater than a preset ratio, control the display to display the image in a state in which at least one of the plurality of groups is hidden.

7. The display apparatus as claimed in claim 6, wherein the memory stores data in which information for each content is structurally connected and organized based on correlations among information;
wherein the processor is configured to:
identify text corresponding to the content within text included in the text result, and identify object information related to the identified text based on data stored in the memory; and
control the display an image included in the search result in a state in which an object corresponding to the identified object information is hidden.

8. The display apparatus as claimed in claim 1, wherein the processor is configured to:
based on a person being included in an image included in the search result, control the display to display the image in which a portion other than the person is hidden.

9. The display apparatus as claimed in claim 1, wherein the processor is configured to:
control the display to display a graphic object for covering the identified portion on the search result, and based on a user manipulation being entered, control the display to change at least one of position, size, shape, color, or type of the graphic object according to the user manipulation; and
wherein a type of the graphic object includes at least one of a shape, a mosaic, or a blur.

10. A method of controlling a display apparatus, comprising:
determining whether to execute a spoiler prevention mode based on the search word;
based on the spoiler prevention mode being executed, searching for information corresponding to the search word and storing a search result in the memory;
identifying at least one portion corresponding to spoiler information from at least one of an image or text included in the stored search result; and
displaying the search result in which the identified portion is hidden.

11. The method as claimed in claim 10, wherein the determining whether to execute a spoiler prevention mode based on the search word comprises:
identifying whether the search word includes a term for determining whether to execute a spoiler prevention mode; and
based on the search word including the term, execute the spoiler prevention mode.

12. The method as claimed in claim 10, wherein the determining whether to execute a spoiler prevention mode based on the search word comprises:
identifying a search pattern of a user based on a pre-stored search history; and
based on the search word being entered, determining whether to execute the spoiler prevention mode based on the search word and the search pattern.

13. The method as claimed in claim 10, wherein the identifying at least one portion corresponding to the spoiler information comprises:
identifying, as the spoiler information, a remaining portion excluding at least one keyword disclosed for each content among at least one of an image or text included in the search result.

14. The method as claimed in claim 10, further comprising:
dividing objects in an image included in the search result into a plurality of groups according to correlations among the objects based on data in which information for each content is structurally connected and organized based on correlations among information; and
comparing display ratios among the plurality of groups, and based on a difference in display ratio being equal to or greater than a preset ratio, displaying the search result in a state in which at least one of the plurality of groups is hidden.

15. The method as claimed in claim 14, further comprising:
identifying text corresponding to the content within text included in the text result;
identifying object information related to the identified text based on the data; and
displaying the search result in a state in which an object corresponding to the identified object information is hidden within an image included in the search result.
